# EUROPÄISCHE PATENTSCHRIFT

(11) **EP 1 651 491 B1**
(45) Veröffentlichungstag und Bekanntmachung des Hinweises auf die Patenterteilung: **28.11.2007**
(21) Anmeldenummer: 04740911.5
(22) Anmeldetag: 12.07.2004
(51) Int. Cl.: B60T 17/00, B60T 11/32

(54) **VORRICHTUNG ZUM WIEDERBEFÜLLEN VON BREMSKREISEN NACH EINEM STARKEN DRUCKLUFTVERBRAUCH UND VORRICHTUNG ZUR DURCHFÜHRUNG DES VERFAHRENS**
APPARATUS FOR REFILLING BRAKE CIRCUITS AFTER A LARGE CONSUMPTION OF COMPRESSED AIR AND DEVICE FOR CARRYING OUT SAID METHOD
DISPOSITIF DE RÉALIMENTATION DE CIRCUITS DE FREINAGE APRÈS UNE CONSOMMATION IMPORTANTE D'AIR COMPRIMÉ ET DISPOSITIF POUR METTRE EN OEUVRE CE PROCÉDÉ

(30) Priorität: 28.07.2003 DE 10334317; 10.12.2003 DE 10357765
(43) Veröffentlichungstag der Anmeldung: 03.05.2006
(60) Teilanmeldung: 07006945.5
(73) Patentinhaber: WABCO GmbH, 30453 Hannover (DE)
(72) Erfinder: DETLEFS, Carsten, 30952 Ronnenberg (DE); DIEKMEYER, Heinrich, 30890 Barsinghausen (DE); LIPPELT, Frank-Dietmar, 30890 Barsinghausen (DE); REINHARDT, Joachim, 30455 Hannover (DE); STRILKA, Bernd, 30459 Hannover (DE)
(74) Vertreter: Günther, Constantin
(86) Internationale Anmeldenummer: PCT/EP2004/007651
(87) Internationale Veröffentlichungsnummer: WO 2005/014358

(56) Entgegenhaltungen:
- EP-A- 0 810 136
- DE-A- 19 811 305
- DE-C- 4 109 741

## Beschreibung

Die Erfindung betrifft eine Vorrichtung zum Wiederbefüllen von Bremskreisen nach einem starken Druckluftverbrauch gemäß Oberbegriff des Anspruchs 1.

Aus der EP 0 810,136 A1 ist eine Druckmittelanlage mit sicherheitsrelevanten Druckmittelkreisen gemäß dem Oberbegriff des Patentanspruchs 1 bekannt. Bei dieser Druckmittelanlage soll zumindest für eine bestimmte Zeitdauer gewährleistet werden, dass die sicherheitsrelevanten Druckmittelkreise auch nach Ausfall einer Steuerenergie, welche die Druckmittelanlage steuert, aus einem nicht sicherheitsrelevanten Druckmittelkreis mit Druckmittel versorgt werden. Hierzu weisen die sicherheitsrelevanten Druckmittelkreise Ventile auf, welche bei Ausfall der Steuerenergie geschlossen sind, während ein Ventil des nicht sicherheitsrelevanten Druckmittelkreises bei Ausfall der Steuerenergie geöffnet ist. Ferner sind zwischen dem nicht sicherheitsrelevanten Druckmittelkreis und den sicherheitsrelevanten Druckmittelkreisen Absperreinrichtungen vorhanden, welche es ermöglichen, dass die sicherheitsrelevanten Druckmittelkreise solange aus dem nicht sicherheitsrelevanten Druckmittelkreis mit Druckmittel versorgt werden wie der Druck in dem nicht sicherheitsrelevanten Druckmittelkreis größer als der Druck in dem sicherheitsrelevanten Druckmittelkreis ist.

Es sind ferner so genannte Mehrkreis-Schutzventile bekannt, die die Energiezufuhr in mehrere voneinander unabhängige Verbraucherkreise aufteilen und die bei Ausfall eines Kreises, beispielsweise durch Leitungsbruch, einen Mindestdruck in den intakten Kreisen aufrechterhalten. Tritt in einem Betriebsbremskreis ein Defekt auf, durch den mehr Luft verloren geht als durch den Kompressor nachgefüllt werden kann, so fällt in den Betriebsbremskreisen der Druck gemeinsam ab, bis der Schließdruck des Ventils erreicht ist. Der Druck im defekten Kreis fällt weiter ab, während der Schließdruck im intakten Kreis erhalten bleibt. Während der Druck im defekten Kreis weiter absinkt, kann der noch intakte Kreis wieder durch den Kompressor gefüllt werden, bis der Öffnungsdruck des defekten Kreises erreicht ist. Es entsteht ein dynamisches Gleichgewicht, bei welchem die geförderte Druckluft die noch intakten Kreise (auch Nebenverbraucherkreise) versorgen kann, gleichzeitig über den Defekt jedoch Luft verloren geht. Nachteilig ist, dass das Wiederauffüllen durch den Kompressor relativ viel Zeit benötigt, da der Kompressor nur eine relativ geringe Förderleistung aufweist, nämlich in der Regel nur 200 bis 400 1 pro Minute. Die Nennenergie in der Bremsanlage wird entsprechend nur langsam wieder aufgebaut, was für die Systemsicherheit von Nachteil ist.

Die Aufgabe der vorliegenden Erfindung besteht darin, eine Vorrichtung anzugeben, durch die der Luftdruck in den Bremskreisen nach einem starken Druckluftverbrauch sehr schnell wieder aufgebaut werden kann.

Diese Aufgabe wird durch die Erfindung gemäß Anspruch 1 gelöst.

Vorteilhafte und zweckmäßige Weiterbildungen der Erfindung sind in den Unteransprüchen angegeben.

Die Erfindung schlägt vor, die Bremskreise nach einem starken Luftverbrauch aus einem Hochdruck-Verbraucherkreis zusätzlich zum Kompressor zu befüllen. Da ein Hochdruckkreis in der Regel eine wesentlich größere Luftmenge pro Zeiteinheit abgeben kann (bis zu mehreren tausend Liter/min) als ein Kompressor (ca. 20.0 bis 400 Liter/min) werden die intakten Bremskreise sehr viel schneller wieder aufgefüllt, als nur mit Hilfe des Kompressors. Dadurch kann die Nennenergie in der Bremsanlage in sehr kurzer Zeit wieder hergestellt werden, gegebenenfalls vermindert um einen defekten Kreis. Nach einem Kreisabriss ist das von besonderer Bedeutung. Durch die Verteilung der Energie zwischen den Kreisen wird die Systemsicherheit wesentlich verbessert. Um dies zu erreichen ist erfindungsgemäß für den Hochdruckkreis ein im stromlosen Grundzustand geschlossenes elektrisch betätigbares Ventil, vorzugsweise Magnetventil, (alternativ ist auch ein vorgesteuertes Ventil verwendbar) und sind erfindungsgemäß für die anderen Verbraucherkreise inklusive der Bremskreise im Grundzustand offene, elektrisch betätigbare Ventile, vorzugsweise Magnetventile, vorgesehen. Sämtliche Magnetventile stehen über eine gemeinsame Verteilerleitung miteinander in Verbindung. Zum Auffüllen der Bremsanlage braucht lediglich das Magnetventil des Hochdruckkreises in die Offenstellung geschaltet zu werden, um Druckluft aus dem Hochdruckkreis, in dem der Druck bzw. die Energie erhalten geblieben ist, über die offenen Magnetventile in die intakten Bremskreise strömen zu lassen.

Die Erfindung soll nachfolgend anhand der beigefügten Zeichnung, in der ein Ausführungsbeispiel dargestellt ist, näher erläutert werden.

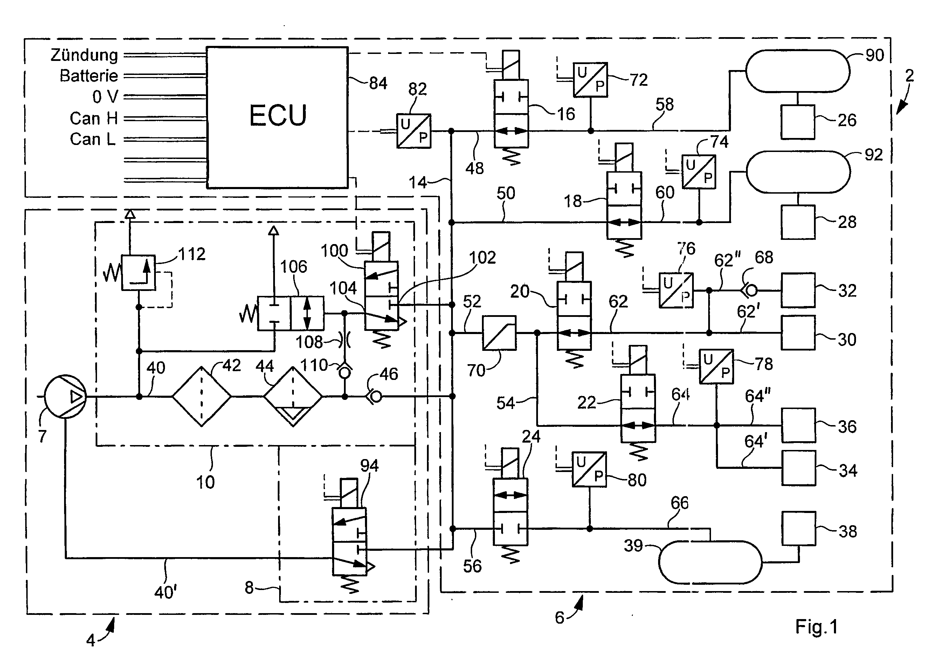

Es zeigen
- Fig. 1: ein Blockschaltbild einer erfindungsgemäß ausgebildeten Vorrichtung zum Wiederauffüllen von Bremskreisen nach einem starken Druckluftverbrauch und
- Fig. 2: ein Diagramm der Druckverläufe bei einem Wiederauffüllvorgang der Bremsanlage.

Druckluftleitungen sind in der Zeichnung durchgezogene Linien, elektrische Leitungen sind gestrichelte Linien.

Die Zeichnung zeigt eine Druckluftanlage 2 mit einem Druckluftversorgungsteil 4 und einem Verbraucherteil 6. Der Druckluftversorgungsteil 4 umfasst einen Kompressor 7, eine Kompressorsteuereinrichtung 8 und ein Lufttrocknerteil 10.

Der Verbraucherteil 6 weist eine Druckluftverteilerleitung 14, mehrere elektrisch betätigbare Magnetventile 16, 18, 20, 22, 24 mit Rückstellfeder und mehrere über die Magnetventile mit Druckluft versorgte Verbraucherkreise 26, 28, 30, 32, 34, 36, 38 auf.

Vom Kompressor 7 führt eine Druckluftversorgungsleitung 40 über ein Filter 42, einen Lufttrockner 44 und ein Rückschlagventil 46 zur Verteilerleitung 14, von der zu den Magnetventilen führende Leitungen 48, 50, 52, 54, 56 abzweigen. Von den Magnetventilen führen Druckluftleitungen 58, 60, 62, 64, 66 zu den Verbraucherkreisen. Die Leitung 62 verzweigt sich in zu den Kreisen 30 und 32 führenden Leitungen 62', 62", wobei in der Leitung 62" noch ein Rückschlagventil 68 angeordnet ist. In der Versorgungsleitung 52 ist ein Druckbegrenzer 70 angeordnet. Hinter dem Druckbegrenzer 70 zweigt die zum Magnetventil 22 führende Leitung 54 ab. Die Leitung 64 verzweigt sich in zu den Kreisen 34 und 36 führenden Leitungen 64' und 64".

Drucksensoren 72, 74, 76, 78, 80, 82 überwachen den Druck in den Verbraucherkreisen und in der Verteilerleitung 14 und geben den jeweiligen Druck als Drucksignal an eine elektronische Steuereinheit 84, die die Magnetventile direkt steuert.

Anstelle des Druckes können auch andere Zustandsgrößen, wie Luftmenge, Luftmasse, Energie, in den Verbraucherkreisen und in der Verbindungsleitung überwacht werden.

Die Verbraucherkreise 26, 28 können Betriebsbremskreise sein. Der Verbraucherkreis 30 kann ein Anhängerbremskreis sein, wobei normalerweise zwei Leitungen, eine Versorgungs- und eine Bremsleitung, zum Anhänger führen. Der Verbraucherkreis 32 kann ein Feststellbremskreis mit Federspeicher sein. Die Verbraucherkreise 34 und 36 können Nebenverbrauchskreise, wie Fahrerhausfederung, Türsteuerung etc., d.h. alles was nichts mit den Bremskreisen zu tun hat, sein. Der Verbraucherkreis 38 kann ein Hochdruckkreis sein.

Die Betriebsbremskreise 26, 28 weisen Druckluftbehälter 90, 92 entsprechend den Richtlinien 98/12/ EG auf. Der Hochdruckkreis 38 weist einen Druckluftbehälter 39 auf.

Die erfindungsgemäße Druckluftanlage ermöglicht, auf Druckluftbehälter in den Kreisen 30, 32, 34, 36 zu verzichten. Es ist z.B. zulässig, andere Verbraucher aus den Betriebsbremskreisen (Kreise 26 und 28) zu versorgen, wenn die Bremsfunktion oder Bremswirkung der Betriebsbremskreise 26 und 28 nicht beeinträchtigt wird.

Der Kompressor 7 wird von der Kompressorsteuerung 8 mechanisch (pneumatisch) über eine Leitung 40' gesteuert. Die Kompressorsteuerung 8 umfasst ein durch die elektronische Steuereinheit 84 schaltbares Magnetventil 94 mit kleiner Nennweite, das im stromlosen Grundzustand, wie dargestellt, entlüftet ist, wodurch der Kompressor 7 eingeschaltet ist. Wenn der Kompressor 7 ausgeschaltet werden soll, weil beispielsweise sämtliche Verbraucherkreise mit Druckluft aufgefüllt sind, schaltet die Steuereinheit 84 das Magnetventil 94 um, so dass der druckbetätigbare Kompressor über die Leitung 40' ausgeschaltet wird. Wird das Magnetventil 94, weil beispielsweise ein Verbraucherkreis Druckluft benötigt, stromlos geschaltet, wird das Magnetventil 94 wieder in den in der Zeichnung dargestellten Grundzustand geschaltet, wodurch die Leitung 40' entlüftet, wird, so dass der Kompressor 7 eingeschaltet wird.

Der Lufttrocknerteil 10 umfasst ein Magnetventil 100 mit kleiner Nennweite, dessen Eingang 102 mit der Verteilerleitung 14 verbunden ist und über dessen Ausgang 104 ein Abschaltventil 106 pneumatisch geschaltet wird, das mit der Versorgungsleitung 40 des Kompressors 7 verbunden ist und zum Entlüften des Lufttrockners dient.

Wenn das Magnetventil 100 durchgeschaltet ist, fördert der Kompressor 7 nicht mehr in die Verbraucherkreise, sondern über das Ventil 106 ins Freie. Gleichzeitig strömt trockene Luft aus der Verteilerleitung 14 (aus den Behältern 90, 92 der Betriebsbremskreise) über das Magnetventil 100 über eine Drossel 108 und ein Rückschlagventil 110 durch den Lufttrockner 44 zur Regeneration seines Trockenmittels und weiter über den Filter 42 und das Ventil 106 ins Freie.

Das Bezugszeichen 112 bezeichnet ein Überdruckventil.

Die Magnetventile 16, 18, 20, 22, 24 werden von der Steuereinheit 84 gesteuert, wobei die Magnetventile 16 bis 22 der Verbraucherkreise 26 bis 34 im stromlosen Grundzustand offen sind, während das Magnetventil 24 des Hochdruckkreises 38 im stromlosen Grundzustand geschlossen ist. Es können auch vorgesteuerte Magnetventile eingesetzt werden. Der Druck in den Kreisen wird unmittelbar an den Magnetventilen überwacht durch die Drucksensoren 72, 74, 76, 78, 80.

Sollte in einem Verbraucherkreis, beispielsweise im Kreis 30 (Anhängerbremskreis) der Druck absinken, erfolgt die Druckluftversorgung durch die Betriebsbremskreise über die offenen Magnetventile mit, wobei der Druck in den Nebenverbraucherkreisen 30 bis 36 durch den Druckbegrenzer 70 auf ein niedrigeres Niveau, beispielsweise 8,5 bar, als das Druckniveau, beispielsweise 10,5 bar, der Betriebsbremskreise 26 und 28 eingestellt wird (vgl. unten). Der Hochdruckkreis 38 ist normalerweise durch das Magnetventil 24 abgesperrt und steht somit nicht mit den übrigen Kreisen in Verbindung. Er weist ein höheres Druckniveau, beispielsweise 12,5 bar auf.

Bei der erfindungsgemäßen Druckluftanlage werden die Drücke in sämtlichen Verbraucherkreisen 26 bis 38 mit Hilfe der Drucksensoren 72 bis 80 gemessen, die der elektronischen Steuereinrichtung 84 elektrische Drucksignale zur Auswertung übermittelt. Die Steuereinrichtung vergleicht die gemessenen Druckwerte mit einem unteren Schwellwert, der dem einzustellenden Druck im jeweiligen Verbraucherkreis entspricht. Unterschreitet der Druck der Bremskreise infolge eines starken Luftverbrauchs oder Leitungsbruchs oder -abrisses diesen Schwellwert, schaltet die Steuereinrichtung das Magnetventil 24 des Hochdruckkreises 38 in die Offenstellung, so dass der Hochdruckkreis über die Verbindungsleitung 14 und die offenen Magnetventile 16 und 18 mit den Bremskreisen 26 und 28 verbunden wird und die im Hochdruckkreis gespeicherte Energie in die intakten Bremskreise geleitet wird und somit die intakten Bremskreise wieder aufgefüllt werden. Gleichzeitig sperrt die Steuereinrichtung 84 die defekten Kreise ab, indem sie deren Magnetventile in die Schließstellung schaltet. Gleichzeitig fördert auch der Kompressor 7 in die intakten Bremskreise.

Das Wiederauffüllen erfolgt sehr schnell, da der Hochdruckkreis eine wesentlich größere Luftmenge pro Zeiteinheit in die Bremskreise fördert (bis zu mehreren tausend Liter/min), als der Kompressor, welcher bei den eingesetzten Ausführungen eine Förderleistung, wie oben schon erwähnt, von etwa 200 bis 400 1/min hat.

Sobald die Steuereinrichtung Druckgleichheit zwischen dem Hochdruckkreis und den aufgefüllten Bremskreisen oder das Erreichen des Solldruckwertes in den Bremskreisen feststellt, schließt sie das Magnetventil 24 wieder zur Unterbrechung der Verbindung zu den Bremskreisen.

Das erfindungsgemäße Verfahren sorgt für eine Energieverteilung zwischen den Verbraucherkreisen, wodurch sehr sichere Betriebsbedingungen erhalten werden.

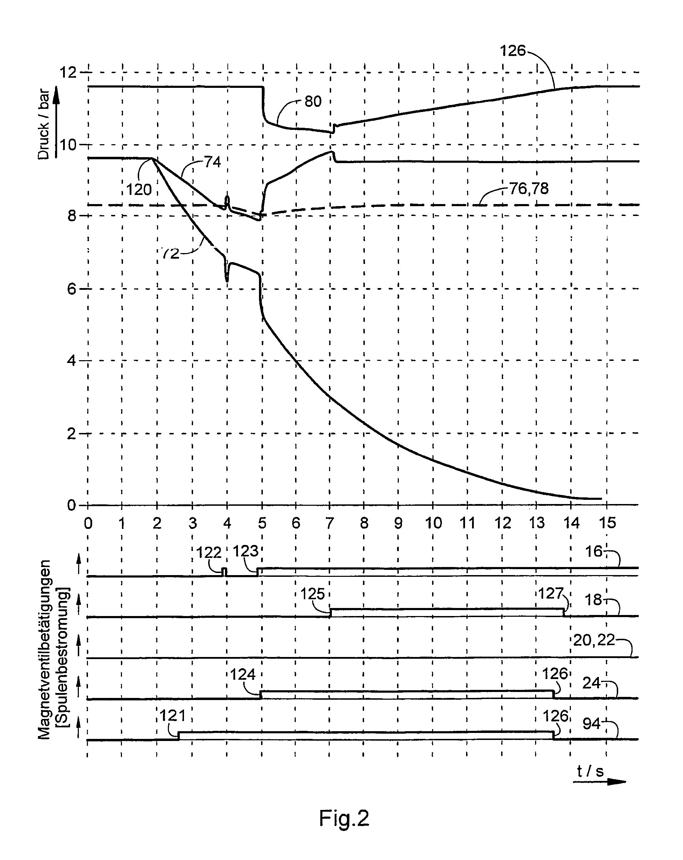

Die Fig. 2 zeigt die Druckverläufe bei einem Bremskreisausfall bspw. durch Leitungsabriss des Bremskreises 26 zum Zeitpunkt 120 und beim Wiederauffüllen des intakten Bremskreises 28 zum Zeitpunkt 124. Mit dem Abfall des Druckes im Kreis 26 (Kurve 72) fällt auch der Druck im pneumatisch verbundenen Bremskreis 28 (siehe Kurve 74) und in der Verbindungsleitung 14 (nicht dargestellt) ab. Der Druckabfall in der Verbindungsleitung 14 hat zur Folge, dass zum Zeitpunkt 121 das den Kompressor einschaltende Magnetventil 94 betätigt wird. Zur Wiederbelüftung des intakten Bremskreises 28 wird zum Zeitpunkt 124 das Magnetventil 24 des Hochdruckkreises 38 in den geöffneten Zustand geschaltet und der defekte Bremskreis 26 praktisch zeitgleich durch Schließen des Magnetventils 16 geschlossen, so dass eine schnelle Wiederbelüftung des intakten Kreises 28 und gegebenenfalls der pneumatisch gekoppelten, ebenfalls intakten Kreise 30 und 36 erfolgen kann. Der Druck in diesen Kreisen 30 und 36 ist während des gesamten Entlüftungsvorganges wenig verändert, da der Druckbegrenzer 70 für eine Entkopplung der Drucksensoren von der Verteilungsleitung 14 sorgt, vergleiche gestrichelte Druckkurve 76, 78 in der Figur 2.

In der Figur 2 ist das Schließen des Magnetventils 16 zu einem Zeitpunkt 123 dargestellt, der zeitlich sehr kurz vor dem Zeitpunkt 124 liegt; dies wird weiter unten etwas näher erläutert. Mit dem Öffnen des Magnetventils 24 des Hochdruckkreises 38 und Schließen des defekten Bremskreises 26 zum Zeitpunkt 124 steigt der Druck im Bremskreis 28 sehr schnell an, bis Druckgleichheit zwischen Hochdruckkreis und Bremskreis hergestellt ist oder der Solldruck des Bremskreises erreicht ist. Am Drucksensor 80 ist der Druckabfall im Hochdruckkreis während dieser schnellen Wiederbelüftung zu erkennen, siehe Abfall der Druckkurve 80 des Hochdruckkreises 38 zum Zeitpunkt 124. Nach erfolgter Wiederbelüftung wird der Kreis 28 durch Schaltung des Magnetventils 18 in den Sperrzustand zum Zeitpunkt 125 für eine bestimmte Zeit abgesperrt. Während dieser Zeit wird der Hochdruckkreis über den Kompressor, der seit der Betätigung des Magnetventils 94 zum Zeitpunkt 121 eingeschaltet ist, wiederbefüllt. Zum Abschluss dieser Wiederbefüllung (Zeitpunkt 126) werden die Steuersignale für die Magnetventile 94 und 24 wieder zurückgesetzt, also das Magnetventil 94 elektrisch bestromt und das Magnetventil 24 wieder in den geschlossenen Grundzustand geschaltet. Danach wird auch das Steuersignal für den Bremskreis 28 zurückgesetzt (Zeitpunkt 127), also das Magnetventil 18 wieder in den offenen Grundzustand geschaltet.

Mit den Bezugzeichen 122 und 123 sind zwei dem Zeitpunkt 124 des endgültigen Sperrens des defekten Kreises 26 vorgeschaltete kurze auf den Steuereingang des Magnetventils 16 gegebene Testsperrimpulse von z. B. 0,2 sec Dauer bezeichnet. Solche Testsperrimpulse können zur sicheren Erkennung des Ausfalls eines Kreises (hier des Kreises 26) eingesetzt werden. Der Testsperrimpuls zum Zeitpunkt 122 sperrt für den angegebenen Zeitbereich von 0,2 sec das Magnetventil 16. Als Folge dieser Sperrung erhöht sich im nicht betroffenen Bremskreis 28 der Druck am Drucksensor 74 kurzzeitig, weil mit einer Unterbrechung der Entlüftung durch den defekten Kreis 26 der Druckbehälter 92 den intakten Kreis 28 wieder belüften kann. Bezüglich des defekten Kreises 26 findet am Drucksensor 72 während der Zeit des Testsperrimpulses ein verstärkter Druckabfall statt, da die Nachspeisung durch die intakten Kreise unterbrochen ist. Da sich einzig beim Kreis 26 der Druck während des Testsperrimpulses verstärkt absenkt, wird die Vermutung, dass dieser Kreis defekt ist, erhärtet. Um zu einer Gewissheit zu gelangen, ob diese Schlussfolgerung richtig ist, kann dieser Test durch pulsartiges Abschalten des Ventils 16 mehrere Male wiederholt werden. Im Ausführungsbeispiel nach Figur 2 wird dies zum Zeitpunkt 123 ein zweites und letztes Mal durchgeführt. Erneut fällt am Kreis 26 der Druck verstärkt ab. Nun wird endgültig festgestellt, dass der Kreis 26 der defekte Kreis ist. Er bleibt im Weiteren (ab dem Zeitpunkt 124) dauerhaft gesperrt.

## Patentansprüche

1. Vorrichtung zum Wiederauffüllen von Betriebsbremskreisen eines Fahrzeuges nach einem starken Druckluftverbrauch oder -verlust mit einer Druckluftanlage, die ein Druckluftversorgungsteil mit Kompressor und die Betriebsbremskreise umfassende Druckluftverbraucherkreise aufweist, die über elektrisch betätigbare Ventile mit Druckluft versorgt werden, wobei die Betriebsbremskreise und mindestens ein weiterer Druckluftverbraucherkreis Druckluftbehälter aufweisen und der Druck in den Druckluftverbraucherkreisen durch Sensoren überwacht wird, deren elektrische Signale von einer elektronischen Steuereinheit ausgewertet werden, die die elektrisch betätigbaren Ventile steuert, **dadurch gekennzeichnet, dass** das elektrisch betätigbare Ventil (24) des mindest einen weiteren einen Druckluftbehälter aufweisenden Druckluftverbraucherkreises (38) im stromlosen oder vorgesteuerten Grundzustand geschlossen ist, während die elektrisch betätigbaren Ventile (16, 18, 20, 22) der Betriebsbremskreise (30, 32, 34, 36) im stromlosen oder vorgesteuerten Grundzustand offen sind, wobei die elektronische Steuereinheit (84)
- die laufend gemessenen Werte einer Zustandsgröße (Druck, Luftmenge, Luftmasse, Energie) der Betriebsbremskreise mit einem Schwellwert vergleicht,
- die bei Unterschreitung des Schwellwertes als defekt oder ausgefallen erkannten Betriebsbremskreise absperrt und
- das elektrisch betätigbare Ventil (24) des mindest einen weiteren Druckluftverbraucherkreises mit Druckluftbehälter in die Offenstellung schaltet zur Herstellung einer Verbindung zwischen dem mindest einen weiteren Druckluftverbraucherkreis mit Druckluftbehälter und den intakten Betriebsbremskreisen zum Wiederauffüllen dieser Betriebsbremskreise aus dem Druckluftbehälter des mindest einen weiteren Druckluftverbraucherkreises.

2. Vorrichtung nach Anspruch 1, **dadurch gekennzeichnet, dass** die elektronische Steuereinheit (84) bei starkem Abfall der Zustandsgröße (Druck, Luftmenge, Luftmasse, Energie), bspw. durch Leitungsbruch oder Leitungsabriss des elektrisch betätigbare Ventil des defekten Bremskreises in die Schließstellung schaltet.

3. Vorrichtung nach Anspruch 1, **dadurch gekennzeichnet, dass** das Druckniveau in dem mindestens einen weiteren Druckluftverbraucherkreis (38) mit Druckluftbehälter größer ist als das Druckniveau in den Betriebsbremskreisen (26, 28).

4. Vorrichtung nach Anspruch 1, **dadurch gekennzeichnet, dass** die elektrisch betätigbaren Ventile (16, 18) der Betriebsbremskreise (26, 28) und die elektrisch betätigbaren Ventile (20, 22, 24) der weiteren Druckluftverbraucherkreise (30,32, 34, 36) an eine gemeinsame Druckluftverteilerleitung (14) angeschlossen sind, die mit einer mit dem Kompressor (7) verbundenen Druckluftversorgungsleitung (40) verbunden ist.

5. Vorrichtung nach Anspruch 1, **dadurch gekennzeichnet, dass** die Steuereinheit (84) das elektrisch betätigbare Ventil (24) des wenigstens einen weiteren Druckluftverbraucherkreises (38) mit Druckluftbehälter wieder schließt, wenn zwischen dem wenigstens einen weiteren Druckluftverbraucherkreis (38) und den wieder mit Druckluft aufgefüllten Betriebsbremskreisen (26, 28) Zustandsgrößengleichheit besteht oder wenn die Zustandsgröße in den Betriebsbremskreisen den Sollwert erreicht hat.

6. Vorrichtung nach Anspruch 1, **dadurch gekennzeichnet, dass** der Schwellwert dem einzustellenden Wert der Zustandsgröße im jeweiligen Druckluftverbraucherkreis entspricht.

7. Vorrichtung nach einem der Ansprüche 1 bis 6, **dadurch gekennzeichnet, dass** die elektrisch betätigbaren Ventile Magnetventile sind.

## Claims

1. Apparatus for replenishing service brake circuits of a vehicle after heavy compressed air usage or loss, with a compressed air system comprising a compressed air supply part that has a compressor and comprising compressed air utilisation circuits, which include the service brake circuits, which compressed air utilisation circuits are supplied with compressed air by way of electrically actuatable valves, the service brake circuits and at least one further compressed air utilisation circuit having compressed air reservoirs and the pressure in the compressed air utilisation circuits being monitored by sensors, the electrical signals of which sensors are evaluated by an electronic control unit which controls the electrically actuatable valves, **characterised in that** the electrically actuatable valve (24) of the at least one further compressed air utilisation circuit (38) having a compressed air reservoir is closed in the de-energised or pilot basic state, whereas the electrically actuatable valves (16, 18, 20, 22) of the service brake circuits (30, 32, 34, 36) are open in the de-energised or pilot basic state, the electronic control unit (84)
- comparing the continuously measured values of a state variable (pressure, amount of air, mass of air, energy) of the service brake circuits with a threshold value,
- shutting off the service brake circuits that are recognised, in the event of the threshold value not being reached, as being defective or as having failed and
- switching the electrically actuatable valve (24) of the at least one further compressed air utilisation circuit having a compressed air reservoir into the open position to make a connection between the at least one further compressed air utilisation circuit having a compressed air reservoir and the intact service brake circuits in order to replenish those service brake circuits from the compressed air reservoir of the at least one further compressed air utilisation circuit.

2. Apparatus according to claim 1, **characterised in that** in the event of a substantial drop in the state variable (pressure, amount of air, mass of air, energy), for example as a result of a break in a line or of a line becoming detached, the electronic control unit (84) switches the electrically actuatable valve of the defective brake circuit to the closed position.

3. Apparatus according to claim 1, **characterised in that** the pressure level in the at least one further compressed air utilisation circuit (38) having a compressed air reservoir is greater than the pressure level in the service brake circuits (26, 28).

4. Apparatus according to claim 1, **characterised in that** the electrically actuatable valves (16, 18) of the service brake circuits (26, 28) and the electrically actuatable valves (20, 22, 24) of the further compressed air utilisation circuits (30, 32, 34, 36) are connected to a common compressed air distribution line (14) which is connected to a compressed air supply line (40) connected to the compressor (7).

5. Apparatus according to claim 1, **characterised in that** the control unit (84) re-closes the electrically actuatable valve (24) of the at least one further compressed air utilisation circuit (38) having a compressed air reservoir, when there is state variable equality between the at least one further compressed air utilisation circuit (38) and the service brake circuits (26, 28) that have been replenished with compressed air or when the state variable in the service brake circuits has reached the desired value.

6. Apparatus according to claim 1, **characterised in that** the threshold value corresponds to the value of the state variable which is to be established in the compressed air utilisation circuit concerned.

7. Apparatus according to one of claims 1 to 6, **characterised in that** the electrically actuatable valves are solenoid valves.

## Revendications

1. Dispositif de réalimentation de circuits de freinage de service d'un véhicule après une forte consommation ou perte d'air comprimé comportant un système d'air comprimé, qui présente une partie d'alimentation en air comprimé avec un compresseur et les circuits consommateurs d'air comprimé comprenant les circuits de freinage de service, qui sont alimentés en air comprimé par l'intermédiaire de soupapes pouvant être commandées électriquement, dans lequel les circuits de freinage de service et au moins un autre circuit consommateur d'air comprimé possèdent des réservoirs d'air comprimé et la pression dans le circuit consommateur d'air comprimé est surveillée par des capteurs, dont les signaux électriques sont évalués par une unité de commande électronique, qui commande les soupapes pouvant être commandées électriquement, **caractérisé en ce que** la soupape pouvant être commandées électriquement (24) d'au moins un autre circuit consommateur d'air comprimé (38) présentant un réservoir d'air comprimé est fermée dans un état fondamental sans courant ou précommandé, tandis que les soupapes pouvant être commandées électriquement (16, 18, 20, 22) des circuits de freinage de service (30, 32, 34, 36) sont ouvertes dans l'état fondamental sans courant ou précommandé, dans lequel l'unité de commande électronique (84)
- compare les valeurs mesurées continûment d'une grandeur d'état (pression, volume d'air, masse d'air, énergie) des circuits de freinage de service à une valeur de seuil,
- ferme les circuits de freinage de service reconnus comme défectueux ou défaillants lors du dépassement vers le bas de la valeur de seuil et
- commute dans l'état ouvert la soupape pouvant être commandée électriquement (24) du au moins un autre circuit consommateur d'air comprimé comportant un réservoir d'air comprimé pour établir une liaison entre le au moins un autre circuit consommateur d'air comprimé comportant un réservoir d'air comprimé et les circuits de freinage de service intacts pour réalimenter ces circuits de freinage de service à partir du réservoir d'air comprimé du au moins un autre circuit consommateur d'air comprimé.

2. Dispositif selon la revendication 1, **caractérisé en ce que** l'unité de commande électronique (84) commute dans la position de fermeture en cas d'une forte chute de la grandeur d'état (pression, volume d'air, masse d'air, énergie), par exemple par cassure de la conduite ou rupture de la conduite de la soupape pouvant être commandée électriquement du circuit de freinage défectueux.

3. Dispositif selon la revendication 1, **caractérisé en ce que** le niveau de pression dans le au moins un autre circuit consommateur d'air comprimé (38) comportant un réservoir d'air comprimé est supérieur à un niveau de pression dans les circuits de freinage de service (26, 28).

4. Dispositif selon la revendication 1, **caractérisé en ce que** les soupapes pouvant être commandées électriquement (16, 18) des circuits de freinage de service (26, 28) et les soupapes pouvant être commandées électriquement (20, 22, 24) des autres circuits consommateurs d'air comprimé (30, 32, 34, 36) sont fermées dans une conduite de répartition d'air comprimée commune (14), qui est reliée à une conduite d'alimentation en air comprimé (40) reliée au compresseur (7).

5. Dispositif selon la revendication 1, **caractérisé en ce que** l'unité de commande (84) ferme de nouveau la soupape pouvant être commandée électriquement (24) du au moins un autre circuit consommateur d'air comprimé (38) comportant un réservoir d'air comprimé, lorsqu'il existe une égalité de grandeur d'état entre le au moins un autre circuit consommateur d'air comprimé (38) et les circuits de freinage de service (26, 28) remplis de nouveau par de l'air comprimé ou lorsque la grandeur d'état a atteint la valeur de consigne dans les circuits de freinage de service.

6. Dispositif selon la revendication 1, **caractérisé en ce que** la valeur de seuil correspond à la valeur réglée de la grandeur d'état dans le circuit consommateur d'air respectif.

7. Dispositif selon l'une des revendications 1 à 6, **caractérisé en ce que** les soupapes pouvant être actionnées électriquement sont des électrovannes.
